# EUROPÄISCHE PATENTANMELDUNG

(11) **EP 3 599 406 A1**
(43) Veröffentlichungstag der Anmeldung: **29.01.2020**
(21) Anmeldenummer: 19180478.0
(22) Anmeldetag: 17.06.2019
(51) Int. Cl.: F16L 11/12, F16L 59/14, F16L 59/153

(54) **DOPPELWANDIGES LEITUNGSROHR SOWIE EIN LICHTWELLENLEITER FÜR EIN SOLCHES LEITUNGSROHR**

(30) Priorität: 25.07.2018 DE 102018117979
(71) Anmelder: Brugg Rohr AG Holding, 5200 Brugg (CH)
(72) Erfinder: Ochmann, Thomas, 30823 Garbsen (DE); Schubert, Meik, 31515 Wunstorf (DE)
(74) Vertreter: Scheffler, Jörg

(57) **Zusammenfassung**

Die Erfindung betrifft ein doppelwandiges Leitungsrohr (1), bestehend aus einem medienführenden Innenrohr (2) und einem als Wellrohr ausgeführten Außenrohr (3), die einen Ringspalt einschließen, in den während der Herstellung ein thermisch isolierendes Füllmaterial sowie eine als Geflecht aus Armierungsfasern (4) ausgeführte Armierung (5) eingebracht wird. Die Armierung (5) ist mit einer Mehrzahl von Lichtwellenleitern (6) durchsetzt, die in an sich bekannter Weise aufgrund der durch Änderung äußerer Einwirkungen veränderlichen Lichtleitungseigenschaften als Sensor für relevante Zustandsgrößen des Leitungsrohres (1) dienen. Dabei umfasst die Armierung (5) mehrere Lagen eines Geflechtes mit einander regelmäßig kreuzenden Armierungsfasern (4) und Lichtwellenleitern (6), die sich wendelförmig am Umfang des Innenrohres (2) verlaufend über dessen gesamten Umfang erstrecken.

## Beschreibung

Die Erfindung betrifft ein doppelwandiges Leitungsrohr, bestehend aus einem medienführenden Innenrohr und einem Außenrohr sowie einem in einem Ringspalt zwischen Innenrohr und Außenrohr angeordneten Lichtwellenleiter als Sensor. Weiterhin betrifft die Erfindung einen Lichtwellenleiter für ein solches doppelwandiges Leitungsrohr.

Durch strengere gesetzliche Auflagen besteht ein immer dringenderer Bedarf an einer lückenlosen Überwachung von Leitungsrohren und den daraus entstandenen Leitungsnetzen zur Leckortung an fluidführenden Leitungssystemen für beispielsweise Wasser, Gas, Öl, Abwasser, Chemikalien oder Fernwärme. Neben der Entdeckung von Leckagen ist die ortsgenaue Bestimmung des Lecks die Voraussetzung für eine schnelle Behebung des Störfalles.

Die DE 39 26 457 A1 betrifft eine Meß- oder Überwachungsvorrichtung für in einem Prüfling auftretende Zug- und Druckkräfte, die eine Mehrzahl von in einer Längsrichtung relativ zueinander gekrümmt verlaufende Lichtwellenleiter als Sensoren aufweist, die aus einem Bündel von flexiblen Lichtleitfasern bestehen. Einzelne Lichtwellenleiter oder Gruppen von Lichtwellenleitern sind geflechtförmig überlappend angeordnet.

Aus der DE 33 05 234 C2 ist es bekannt, einen Lichtwellenleiter als Sensor in einen zugfesten Draht aus einer faserverstärkten Harzstruktur einzubetten, um diesen Draht auf Zug, Bruch oder Biegung zu überwachen. Zur Erhöhung der Empfindlichkeit des Sensors wird vorgeschlagen, dass als inhomogene Zwischenschicht um den Lichtwellenleiter mindestens eine Wendel eines Metalldrahtes oder eines Glasfadens gewickelt ist.

Aus der DE 89 02 072.3 U1 ist es bekannt, um einen Lichtwellenleiter und unter einem Geflecht ein in Flüssigkeit quellendes Material vorzusehen. Durch das Aufquellen des Materials in der Flüssigkeit verkürzt sich das entsprechend angepasste Geflecht, sodass der Lichtwellenleiter ausknickt und schließlich bricht. Durch bekannte Messverfahren kann dann der Bruch und dessen Lage festgestellt werden.

Lichtwellenleiter-Fasern enthaltende, auf Temperaturänderungen ansprechende Sensorelemente sind beispielsweise aus der DE 195 20 826 A1, der DE 690 24 224 T2, der EP 0 501 323 B1 und der WO 89/02063 A1 bekannt.

Aus der US 6,305,427 B1 ist ein doppelwandiges Leitungsrohr mit einem in einem Ringspalt zwischen Innenrohr und Außenrohr angeordneten Lichtwellenleiter bekannt.

Aus der EP 1 884 811 A1 ist ein Rohr bekannt, welches mindestens einen Sensor zur Erfassung der für die Eigenschaften oder die Funktion des Rohrs relevanten Messgröße aufweist. Der Sensor ist hierzu durch ein kunststofftechnisches Formgebungsverfahren bei der Herstellung des Rohrs in die Rohrwandung des Rohrs integriert.

Temperaturmessungen unter Verwendung von Lichtwellenleitern als thermische Sensoren bzw. Temperatursensoren sind an sich ebenfalls bekannt. Diese bieten den Vorteil, dass entlang eines bis zu mehreren Kilometer langen Lichtwellenleiters, beispielsweise eine Glasfaserleitung, Temperaturprofile gemessen werden können.

Es ist auch bereits bekannt, die Belastbarkeit des Leitungsrohres durch eine Armierung zu verbessern. So offenbarte beispielsweise die WO 92/19904 A1 die Verwendung eines Verbundrohres zum Transport von Fernwärme, wobei das Verbundrohr mit einem Rohr aus vernetztem Polyethylen und mindestens einer das Rohr umgebenden Schicht versehen ist, wobei zwischen der Schicht und dem Rohr eine Armierung aus mindestens einem Stahlfaden angeordnet ist.

Die WO 2009/103483 A1 beschreibt ein Verbundrohr mit einem Rohr aus vernetztem Polyethylen und mindestens einer das Rohr umgebenden Schicht, wobei zwischen der Schicht und dem Rohr eine Armierung aus mindestens einem Stahlfaden angeordnet ist

Ferner ist aus der EP 1 100 999 B1 ein Verfahren zum Verlegen von Datenleitungen in vorhandene, erdverlegte Rohrleitungen bekannt, wobei vorhandene Rohrleitungen für die Übertragung von Daten und Signalen genutzt werden, indem in die Rohrleitung ein schlauchförmiger Liner eingezogen wird. Der Liner kann eine Armierung aus Glasfasern, Filz oder aus Natur- oder Kunstfasern und eine schlauchförmige Hülle aus Filz und/oder eine Schutzfolie aufweisen. Die Glasfasermatte und die schlauchförmige Hülle sind mit einem aushärtbaren Kunststoffmaterial, z. B. Polyester-, Vinylester-, Epoxid - oder 3P-Harz, getränkt. Dabei können die Datenleitungen, beispielsweise Glasfaserkabel, selbst Teil der armierenden Glasfasermatte sein oder sind bereits in die Armierung zur Herstellung des Liners eingearbeitet.

Als nachteilig erweist sich in der Praxis der Aufwand, der mit dem Einbringen eines solchen Lichtwellenleiters zwischen dem Außenrohr und dem Innenrohr und dessen sichere Fixierung verbunden ist, während der Ringspalt ausgeschäumt wird. Dabei muss der Lichtwellenleiter derart fixiert werden, dass die beim Expandieren des Isolierschaumes auftretenden Kräfte nicht zu einer Beeinträchtigung der äußeren Beschaffenheit des Lichtwellenleiters oder gar zu einer Unterbrechung führen.

Der Erfindung liegt die Aufgabe zugrunde, eine Möglichkeit zu schaffen, das Einbringen des Lichtwellenleiters in den Ringspalt wesentlich zu vereinfachen und zugleich das Risiko einer möglichen Beschädigung des Lichtwellenleiters beim Ausschäumen zu verringern.

Diese Aufgabe wird erfindungsgemäß mit einem Leitungsrohr gemäß den Merkmalen des Anspruches 1 gelöst. Die weitere Ausgestaltung der Erfindung ist den Unteransprüchen zu entnehmen.

Erfindungsgemäß ist also ein Leitungsrohr vorgesehen, bei dem zumindest ein Lichtwellenleiter als Bestandteil einer das Innenrohr zumindest abschnittsweise umfangsseitig einschließenden Armierung ausgeführt ist und mit dieser zu einer Bau- und Funktionseinheit verbunden ist. Dadurch kann der Lichtwellenleiter nicht nur als Bestandteil der Armierung wesentlich einfacher in den Ringspalt eingebracht werden, weil die Armierung eine formstabile Einheit bildet und sich daher problemlos handhaben und positionieren lässt. Im Gegensatz zu den aus dem Stand der Technik bekannten Lichtwellenleitern, die lediglich in den Ringspalt eingezogen werden können, lässt sich erfindungsgemäß die so geschaffenen Einheit auch in den Ringspalt einschieben. Darüber hinaus ist der Lichtwellenleiter jedoch auch vor einer Beschädigung während der Montage weitaus besser geschützt als ein aus einer Einzelfaser bestehender Lichtwellenleiter, weil die Armierung eine optimale Stützfläche für den Lichtwellenleiter bildet und zudem auch dazu dient, äußere Krafteinwirkungen bei der Herstellung des Leitungsrohres aufzunehmen, um deren Übertragung auf den Lichtwellenleiter zu verringern.

Eine besonders praxisgerechte Ausgestaltungsform der Erfindung wird dadurch erreicht, dass die Armierung als ein in zumindest einer Ebene angeordnetes Gewebe, Geflecht, Gewirke oder Gestricke mit einander regelmäßig kreuzenden und/oder berührenden Armierungsfasern und zumindest einem Lichtwellenleiter ausgeführt ist. Hierdurch wird eine vollständige Integration des Lichtwellenleiters in die Armierung ermöglicht, indem dieser bereits bei der Herstellung des Geflechtes gemeinsam mit den Armierungsfasern, vorzugsweise in demselben Arbeitsschritt, verarbeitet und dadurch in das Gewebe, Geflecht oder dergleichen eingebracht wird. Hierdurch wird die Herstellung des Leitungsrohres weiter vereinfacht, indem der Lichtwellenleiter nicht nur in die Herstellung des Geflechtes ohne zusätzlichen Aufwand integriert werden kann, sondern zudem auch eine gesonderte Positionierung des Lichtwellenleiters vollständig entfällt. Als Bindungen des Gewebes eignet sich beispielsweise eine Köper-, Leinwand- oder Atlasbindung.

Als besonders praxisgerecht hat es sich erwiesen, wenn der Lichtwellenleiter anstelle einer Armierungsfaser gemeinsam mit den übrigen Armierungsfasern die Armierung bildet oder zumindest ein Lichtwellenleiter in einem regelmäßigen Abstand zu den Armierungsfasern in der Armierung angeordnet ist, sodass der Lichtwellenleiter anstelle einer bei üblichen Armierungen vorhandenen Faser eingesetzt und deren Funktion als Zugträger zumindest eingeschränkt übernehmen kann. Es liegt auf der Hand, dass auf diese Weise auch mehr als der zumindest eine für die Sensorfunktion erforderliche Lichtwellenleiter in die Armierung integriert werden kann, um so bei einer möglichen Beschädigung bedarfsweise auf einen weiteren Lichtwellenleiter zurückgreifen oder aber mehrere unabhängige Messungen durchführen zu können. Hierdurch lässt sich die Zuverlässigkeit sowie die Genauigkeit bei der Messwerterfassung verbessern.

Eine besonders vorteilhafte Ausführungsform der Erfindung wird dadurch erreicht, dass die Armierungsfasern zumindest einen Metalldraht oder eine Kunststoffaser hoher Zugfestigkeit, beispielsweise Aramid, und der Lichtwellenleiter zumindest eine Glasfaser aufweist, wobei bevorzugt die Armierungsfasern und der der Lichtwellenleiter nahezu identische Durchmesser sowie auch sonstige Eigenschaften, beispielsweise Zugfestigkeiten, und insbesondere auch vergleichbare thermische Dehnungen sowie Temperaturbeständigkeiten aufweisen.

Dabei erweist es sich auch als besonders praxisgerecht, wenn der Lichtwellenleiter geneigt zu einer Haupterstreckung des Leitungsrohres als insbesondere regelmäßige wendelförmige oder schneckenförmige Wicklung angeordnet ist. Hierdurch umschlingt der Lichtwellenleiter den Umfang des Innenrohres mit einer insbesondere konstanten Steigung, sodass die Länge des Lichtwellenleiters wesentlich größer als der korrespondierende Rohrabschnitt des Leitungsrohres ist. Dadurch lassen sich erfasst Messwerte bzw. Abweichungen weitaus besser lokalisieren als mit einem nach dem Stand der Technik bekannten, parallel zur Mittellängsachse verlaufenden Lichtwellenleiter. Zudem können so auch veränderte Parameter, beispielsweise Druckänderungen, über den gesamten Umfang des Leitungsrohres zuverlässig erfasst werden. Entsprechend dem Steigungswinkel kann so die Messwerterfassung an die jeweiligen Einsatzbedingungen in optimaler Weise angepasst werden.

Das Armierungsgeflecht könnte beliebig in dem Ringspalt zwischen dem Innenrohr und dem Außenrohr angeordnet werden. Besonders praxisnah ist es hingegen, wenn die Armierung auf einer Außenseite des Innenrohres und/oder der Innenseite des Außenrohres angeordnet ist und somit vor dem Ausschäumen des Ringspaltes an dem jeweiligen Rohr fixiert werden kann. Hierdurch wird die Herstellung des Leitungsrohres weiter vereinfacht, indem mögliche Fehlerquellen während des Herstellungsprozesses minimiert sind.

Dabei hat es sich zudem als besonders vorteilhaft erwiesen, wenn mehrere Lichtwellenleiter über den Umfang des Innenrohres gleichverteilt angeordnet sind, sodass bei der Verbindung mehrerer Leitungsrohre nicht lediglich eine bestimmte Winkelstellung zum Anschluss der Lichtwellenleiter bestimmt und geeignet ist, sondern eine beliebige relative Winkelstellung eingestellt werden kann. Insbesondere kann die Kopplung der Lichtwellenleiter benachbarter Leitungsrohre aufgrund des geringen Differenzwinkels auch dann vorgenommen werden, wenn diese nicht unmittelbar fluchten. Hierzu ermöglicht das Verbindungselement für die Leitungsrohre aus den verfügbaren Lichtwellenleitern eine beliebige Auswahl einander benachbarter Lichtwellenleiter, die sich beispielsweise aufgrund der Umstände bei der Montage der Leitungsrohre ergibt.

Bevorzug weist hierbei der Lichtwellenleiter eine Litze mit einem Durchmesser von beispielsweise 0,07 mm und eine gegen deren Umfang außenseitig anliegende Metallhülse mit einem Durchmesser von beispielsweise 0,9 mm auf, um so mit den Armierungsfasern weitgehend übereinstimmende Eigenschaften sowie einen optimalen Schutz gegenüber Umgebungseinflüssen, insbesondere gasförmiger oder flüssiger Medien zu realisieren.

Die erfindungsgemäße Aufgabe wird weiterhin noch mit einem Lichtwellenleiter für ein solches doppelwandiges Leitungsrohr dadurch geschaffen, dass der Lichtwellenleiter als Bestandteil einer zur Stabilisierung des Leitungsrohres bestimmten Armierung ausgeführt ist. Eine solche aus einem flachen oder ringförmig geschlossenen, strumpfförmigen Gewebe, Gewirke oder Gestricke bestehende Armierung lässt sich mit geringem Aufwand herstellen, konfektionieren und bei nahezu beliebigen Leitungen, insbesondere Leitungsrohren, beliebig anbringen. Dabei erfüllt die Armierung neben ihrer an sich bekannten Verstärkungsfunktion durch zumindest einen, vorzugsweise mehrere Lichtwellenleiter die Aufgabe einer sensorischen Erfassung von Zustandsänderungen, beispielsweise Druckänderungen. Durch die geringen Abstände der so erreichbaren Durchsetzung der Armierung mit dem Lichtwellenleiter kann eine wesentliche Verbesserung der Messwerterfassung realisiert werden, ohne dass hierdurch ein Mehraufwand bei der Herstellung entsteht.

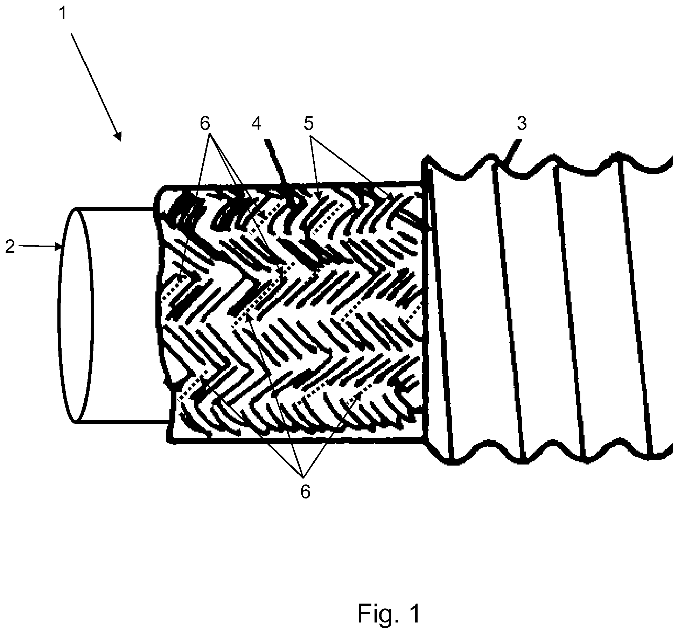

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Prinzipdarstellung eines erfindungsgemäßen Leitungsrohres.

Figur 1 zeigt ein doppelwandiges Leitungsrohr 1, bestehend aus einem medienführenden Innenrohr 2 und einem als Wellrohr ausgeführten Außenrohr 3. In einem Ringspalt zwischen dem Innenrohr 2 und dem Außenrohr 3 wird während der Herstellung ein thermisch isolierendes Füllmaterial sowie zur Stabilisierung, insbesondere zur Verbesserung der Druckstabilität, eine als Geflecht aus Armierungsfasern 4 ausgeführte Armierung 5 eingebracht. Erfindungsgemäß ist die Armierung 5 mit einer Mehrzahl von Lichtwellenleitern 6 durchsetzt, die in an sich bekannter Weise aufgrund der durch Änderung äußerer Einwirkungen veränderlichen Lichtleitungseigenschaften als Sensor für relevante Zustandsgrößen des Leitungsrohres 1 dienen. Insbesondere umfasst die Armierung 5 mehrere Lagen eines Geflechtes mit einander regelmäßig kreuzenden Armierungsfasern 4 und Lichtwellenleitern 6, die sich wendelförmig am Umfang des Innenrohres 2 verlaufend über dessen gesamten Umfang erstrecken.

## Patentansprüche

1. Doppelwandiges Leitungsrohr (1), bestehend aus einem medienführenden Innenrohr (2), einem Außenrohr (3) sowie einem in einem Ringspalt zwischen Innenrohr (2) und Außenrohr (3) angeordneten Lichtwellenleiter (6) als Sensor für relevante Zustandsgrößen des Leitungsrohrs (1), **dadurch gekennzeichnet, dass** zumindest ein Lichtwellenleiter (6) als Bestandteil einer das Innenrohr (2) zumindest abschnittsweise umfangsseitig einschließenden Armierung (5) ausgeführt ist.

2. Leitungsrohr (1) nach Anspruch 1, **dadurch gekennzeichnet, dass** die Armierung (5) als ein in zumindest einer Ebene angeordnetes Gewebe, Geflecht, Gewirke oder Gestricke mit einander regelmäßig kreuzenden und/oder berührenden Armierungsfasern (4) und zumindest einem Lichtwellenleiter (6) ausgeführt ist.

3. Leitungsrohr (1) nach den Ansprüchen 1 oder 2, **dadurch gekennzeichnet, dass** der Lichtwellenleiter (6) anstelle einer Armierungsfaser (4) gemeinsam mit den übrigen Armierungsfasern (4) die Armierung (5) bildet.

4. Leitungsrohr (1) nach zumindest einem der vorhergehenden Ansprüche, **dadurch gekennzeichnet, dass** zumindest ein Lichtwellenleiter (6) in einem regelmäßigen Abstand zu den Armierungsfasern (4) in der Armierung (5) angeordnet ist.

5. Leitungsrohr (1) nach zumindest einem der vorhergehenden Ansprüche, **dadurch gekennzeichnet, dass** die Armierungsfasern (4) zumindest einen Metalldraht oder eine Kunststoffaser hoher Zugfestigkeit, beispielsweise Aramid, und der Lichtwellenleiter zumindest eine Glasfaser aufweist.

6. Leitungsrohr (1) nach zumindest einem der vorhergehenden Ansprüche, **dadurch gekennzeichnet, dass** der Lichtwellenleiter (6) geneigt zu einer Haupterstreckung des Leitungsrohres (1) als insbesondere regelmäßige wendelförmige Wicklung angeordnet ist.

7. Leitungsrohr (1) nach zumindest einem der vorhergehenden Ansprüche, **dadurch gekennzeichnet, dass** die Armierung (5) auf einer Außenseite des Innenrohres (2) und/oder der Innenseite des Außenrohres (3) angeordnet ist.

8. Leitungsrohr (1) nach zumindest einem der vorhergehenden Ansprüche, **dadurch gekennzeichnet, dass** mehrere Lichtwellenleiter (6) über den Umfang des Innenrohres (2) gleichverteilt angeordnet sind.

9. Leitungsrohr (1) nach zumindest einem der vorhergehenden Ansprüche, **dadurch gekennzeichnet, dass** die Lichtwellenleiter (6) eine Litze und eine gegen deren Umfang außenseitig anliegende Metallhülse aufweist.

10. Leitungsrohr (1) nach zumindest einem der vorhergehenden Ansprüche, **dadurch gekennzeichnet, dass** in dem Ringspalt zwischen dem Innenrohr (2) und dem Außenrohr (3) zumindest abschnittsweise ein thermisch isolierendes Füllmaterial angeordnet ist.

11. Leitungsrohr (1) nach zumindest einem der vorhergehenden Ansprüche, **dadurch gekennzeichnet, dass** das Innenrohr (2) und/oder das Außenrohr (3) zumindest als einen wesentlichen Materialanteil Kunststoff und/oder Metall aufweist.

12. Leitungsrohr (1) nach zumindest einem der vorhergehenden Ansprüche, **dadurch gekennzeichnet, dass** das Leitungsrohr (1) zumindest abschnittsweise elastische und/oder flexible Eigenschaften aufweist.

13. Leitungsrohr (1) nach zumindest einem der vorhergehenden Ansprüche, **dadurch gekennzeichnet, dass** das Leitungsrohr (1) zum Transport für kryogene Medien, insbesondere Kraftstoffe bestimmt ist und dass der Lichtwellenleiter (6) kältestabil ausgeführt ist.

14. Leitungsrohr (1) nach zumindest einem der vorhergehenden Ansprüche, **dadurch gekennzeichnet, dass** das Leitungsrohr (1) zum bedarfsweisen Einsatz transportabel ausgeführt ist.

15. Ein als Sensor für relevante Zustandsgrößen eines doppelwandigen Leitungsrohrs (1) dienender Lichtwellenleiter (6) nach zumindest einem der vorhergehenden Ansprüche, **dadurch gekennzeichnet, dass** der Lichtwellenleiter (6) als Bestandteil einer zur Stabilisierung des Leitungsrohes (1) bestimmten Armierung (5) ausgeführt ist.
